# EUROPEAN PATENT APPLICATION

(11) **EP 1 939 788 A1**
(43) Date of publication of application: **02.07.2008**
(21) Application number: 06425881.7
(22) Date of filing: 29.12.2006
(51) Int. Cl.: G06K 9/00

(54) **Device and method for the taking of fingerprints**

(71) Applicant: Italdata Ingegneria Dell'Idea S.p.A., 00128 Roma (IT)
(72) Inventor: Boccacci, Roberto, ITALDATA-Ingeneria dell'idea, 00128 - Roma (IT)
(74) Representative: Leone, Mario

(57) **Abstract**

Device (1) for the taking of fingerprints, wherein the fingerprint is impressed on an impression surface (3) of a prism (5), allows to obtain of a predetermined image by indirect light, less sensitive to the presence of residues and dirt, and comprises a light source (15) laterally placed with respect to the taking surface (11) on which the fingerprint is impressed, one surface (12) adjacent to that on which the fingerprint is impressed being treated so as to have one layer (13) having a reduced reflectivity directed toward the inside of the prism (5).

## Description

The present invention is related to a device and to a method for the taking of fingerprints, wherein the fingerprint is impressed on an impression surface of a prism.

Optical devices for taking and reading fingerprints are known, wherein prisms are used for projecting the fingerprint image on one of the prism surfaces. Here and in the following, as surfaces of a prism the rectangular surfaces extending between the prism bases are understood.

In general, in the most common case of a right-angled triangular prism, at one surface a light source is arranged, on another surface the fingerprint is laid and on the third surface, i.e. the reading surface, the image created by the light reflected by the fingerprint ridges is projected.

However, this layout implies the deformation of the image created on the reading surface, not respecting the proportions of the original image. This deformation, which is generally known, can be compensated through the electronic processing of the image itself.

To obviate to this drawback using a purely optical system, anamorphic prisms are utilised, allowing to create an anamorphic image of the fingerprint, i.e. an image respecting the original proportions if observed from a certain observation point, wherein generally an optical sensor is placed to scan said image.

This anamorphic image is obtained through an anamorphic prism, well-known in optics.

Both the conventional prism, with the electronic compensation of the image, and the anamorphic prism suffer of a drawback due to the dirt, in particular to the fat residue left by the fingerprint itself.

As it is known, such residue is able to give back the fingerprint if correctly read, but it can also deteriorate the subsequent fingerprints using the outstanding prism. In borderline cases, the residual image can even be confused with a new fingerprint.

Hence, it is desirable to set out a fingerprint taking device and/or a related method which are insensitive to the presence of fingerprint residues without requiring complex cleaning operations, not suitable in a quick and frequent fingerprint takings in peculiar contexts, e.g. customs, airports and the like.

The technical problem underlying the present invention is to provide a device and a method for obviating the drawbacks mentioned with reference to the prior art.

This problem is solved by a device as above specified, wherein the light source is laterally placed with respect to the surface on which the fingerprint is impressed, one surface adjacent to that on which the fingerprint is impressed being treated so as to have one layer having a reduced reflectivity directed toward the inside of the prism itself.

In accordance with the same inventive concept, a method for the taking of fingerprints using a prism, comprises the steps of:
* providing a first prism surface to impress on it a fingerprint;
* providing a layer having a reduced reflectivity directed toward the inside of the prism on a surface adjacent to said first surface;
* laterally illuminating said first surface; and
* taking the image of the fingerprint on a further prism surface.

The main advantage of the device and of the method according to the present invention lies in allowing to obtain of a predetermined image by indirect light, less sensitive to the presence of residues and dirt.

Advantageously, the above defined device and method can be carried out using an anamorphic prism.

The present invention will be hereinafter described according to a preferred embodiment thereof, provided to an exemplificative and limitative purpose with reference to the annexed drawing, wherein:

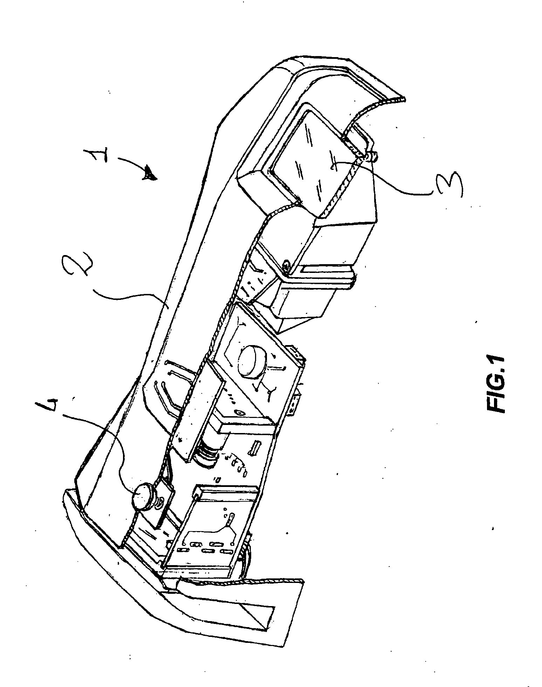

* figure 1 shows a partially sectioned perspective view of a device for the taking ad the reading of fingerprints according to the invention;

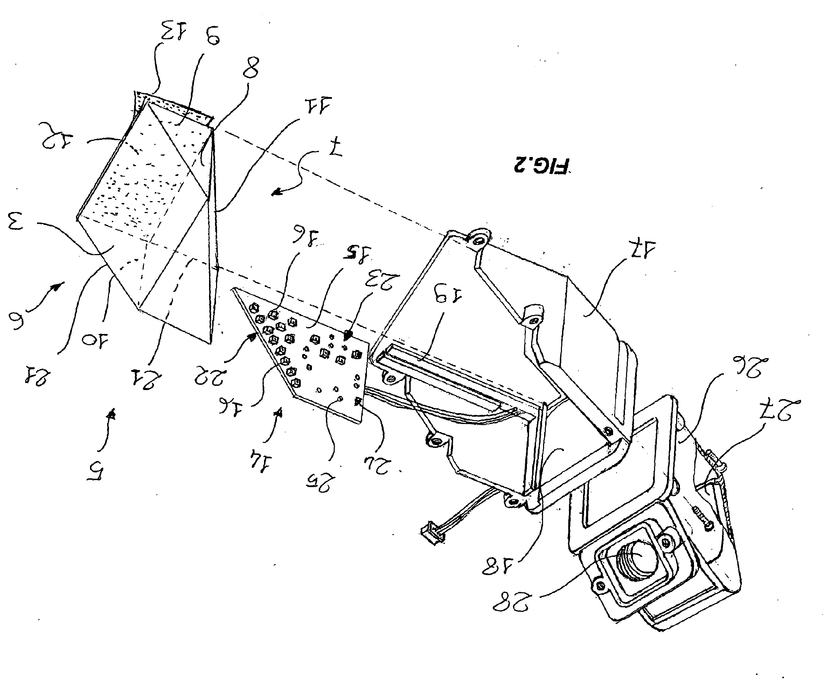

* figure 2 shows a partially exploded perspective view of a detail of the device of figure 1; and
* figure 3 shows a perspective view of the detail of figure 2 depicting the use thereof..

With reference to the figures, a device for the taking and the reading of fingerprints is generally indicated as 1. This version of device is substantially portable and suitable to be connected, as a peripheral, to a computer for treating, storing and comparing the fingerprint.

However, it is understood that what is described in the following can be referred to any device able to carry out the function of taking fingerprints, e.g. a device for generating the required data for an electronic passport or for an electronic identity card, a fixed check point and so on.

The device 1 of the present embodiment comprises a case 2 substantially hand-grippable for an operator, an impression surface 3 for fingerprints, a starting button 4, and other possible reading device of optical kind, RFID, a microchip reader and the like.

The impression surface 3 corresponds to a first surface of an anamorphic prism 5 of the device 1, resulting from the matching of a first right-angled triangular prism 6 and of a second right-angled triangular prism 7, both having, as base polygon, a right-angled triangle.

In this kind of prism, as inclined surface it is understood a surface, having greater width, corresponding to the hypotenuse of the right-angled triangle constituting the base of the prism. Said impression surface 3 corresponds to a first inclined surface of the first prism 6.

A first non-inclined surface 8 of the first prism 6 corresponds to a respective and non-inclined surface of the second prism 7.

Said first inclined surface 3 extends between a first triangular base 9 of its prism 6 and a plane surface resulting from the matching of the triangular base opposite to said first base, and a second non-inclined surface of the second prism 7. Said plane surface 10 hence has the shape of a right-angled trapezium. The second inclined surface of the anamorphic prism 5, belonging to the second prism 7 and opposite to the first inclined surface 3, constitutes the taking and reading surface 11 of the anamorphic prism 5.

The second non-inclined surface 12 of the first prism 6, adjacent to the impression surface 3, forms a further right-angled trapezium with the base of the second prism 7.

Said second non inclined surface 12 of the first prism 6, i.e. a surface adjacent to the impression surface of the anamorphic prism 5, is treated in such a way to shows a layer directed toward the inside of the prism 5 having a reduced reflectivity.

In this embodiment, the surface 12 is treated overlapping a high emissivity layer 13. In particular, such layer 13 can have an light absorption close to one, i.e. a reflectivity close to zero, equivalent to that of a black body incapable of reflecting light.

However, it is understood that these optical characteristics should be valid at least for the operational wavelengths of the device 1, i.e. greater than 700 nm (infrared field).

At the plane surface 10, in a lateral position with respect to the impression surface 3, the device 1 comprises a light source, indicated in general as 15, embodied by a printed circuit board on which a plurality of first LEDs 16 are mounted, electrically supplied in a conventional manner.

Said printed circuit board 15 is plane, having a shape overlapping that of the plane surface 10.

Such printed circuit board 15 and the anamorphic prism 5 are housed in a first case 17 leaving uncovered the impression surface 3 and containing the taking surface 11, in front of which a first opening 18 is formed. Moreover, a positioning rail 19 is provided for the printed circuit board 15.

From the arrangement of the first LEDs 16 on the printed circuit board it is understood that the illumination is more intense at the lateral margin 20 of the impression surface 3, and at the vertex of the plane surface 10, where a first set 22 of LEDs 16 is placed. A second set 23 of LEDs 16 is placed at the lower margin 21 of the plane surface 10 on the second prism 7.

On the printed circuit board 15 a third set 24 of second LEDs 24 is also provided, having a different colouring with respect to that of the first LEDs 16 and intended to be switched on for signalling the operation of the device 1 through the impression surface 3.

The plane surface 10, wherein the light source is placed, is satinized, so as to improve the light diffusion inside the prism 5.

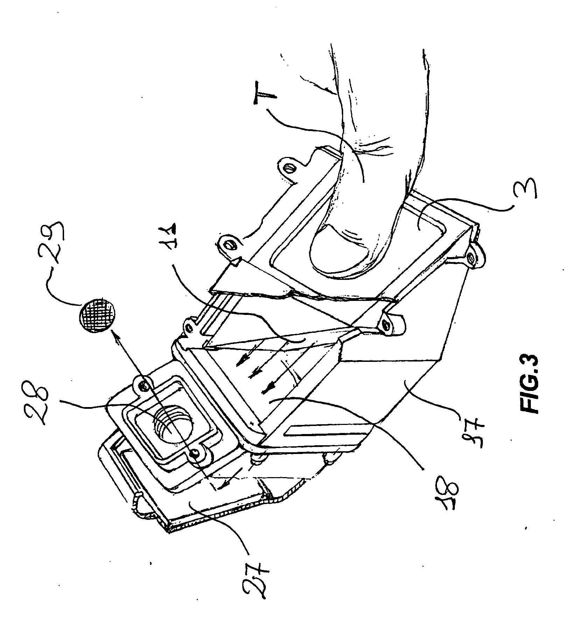

A second case 26 is connected to the first case 17 at the opening 18. The second case 26 contains a reflecting surface 27 reflecting the image formed over the taking and reading surface 11 toward a second opening 28, housing lenses 29 (figure 3) operating as filter, a filtering layer being deposited on them, in particular on the surface of the first or only lens receiving the light beam.

In the preset embodiment, the first LEDs are of the IRLED type, i.e. they emit an infrared radiation having a wavelength greater than 700 nm. Thus, said filtering layer will have a bandwidth for wavelengths greater than 700 nm.

The device 1 comprises, at said second opening, a digital optical sensor, not shown, digitalizing the image of the fingerprint. The sensor is of the CCD type, or even of the CMOS type.

With reference to the device herein described, in the following an embodiment of the method according to the invention will be detailed.

In such a method, an anamorphic prism 5 is provided as above described, on which a first surface is provided, in particular an inclined surface of the prism, for having a fingerprint impressed on it by a simple fingertip pressure.

On a surface adjacent to said first surface, a layer having a reduced reflectivity is provided, preferably having a light absorption coefficient close to one, and said first surface is laterally illuminated.

Then, the image of the fingerprint on a further surface of the anamorphic prism is taken, opposite to said first surface 3.

Nin the method according to the present embodiment, the lighting is more intense at a lateral margin of said first surface, and at the prism vertex at said first surface.

The lighting is carried out by an infrared radiation.

To the above device and method a man skilled in the art, to comply with further and contingent requirements, will adopt several further variations and modifications, in any case all falling within the protection scope of the present invention, as defined by the annexed claims.

## Claims

1. Device (1) for the taking of fingerprints, wherein the fingerprint is impressed on an impression surface (3) of a prism (5), and wherein the light source (15) is laterally placed with respect to the taking surface (11) on which the fingerprint is impressed, one surface (12) adjacent to that on which the fingerprint is impressed being treated so as to have one layer (13) having a reduced reflectivity directed toward the inside of the prism (5).

2. Device (1) according to claim 1, wherein said prism is an anamorphic prism (5), having a reading and taking surface (11) opposite to said impression surface (3).

3. Device (1) according to claim 2, wherein the anamorphic prism results from the matching of a first right-angled triangular prism (6) and of a second right-angled triangular prism (7), both having, as base polygon, a right-angled triangle.

4. Device (1) according to claim 2, wherein said impression surface (3) corresponds to a first inclined surface of the anamorphic prism (5).

5. Device (1) according to claim 4, wherein said taking and reading surface (11) corresponds to a second inclined surface of the anamorphic prism (5).

6. Device (1) according to claim 1, wherein said adjacent surface (12) is treated overlapping a high emissivity layer (13).

7. Device (1) according to claim 6, wherein said layer (13) has a light absorption coefficient close to one.

8. Device (1) according to claim 1, wherein the light source (15) comprises a plurality of LEDs (16).

9. Device (1) according to claim 8, wherein the LED arrangement is such as the lighting is more intense at a lateral margin (20) of the impression surface (3), and at the prism vertex ay said impression surface (3).

10. Device (1) according to claim 1, wherein the surface (10) on which the light source is placed (15) is satinized, so as to improve the light diffusion inside the prism (5).

11. Device (1) according to claim 2, wherein a reflecting surface (27) reflects the image formed on the taking and reading surface (11).

12. Device (1) according to claim 1, wherein the LEDs (16) are of the IRLED type.

13. Device (1) according to claims 11 and 12, wherein the image formed on the taking and reading surface (11) is filtered through a filter having a bandwidth for wavelengths greater than a 700 nm.

14. Device (1) according to claim 1, comprising an optical sensor.

15. Device (1) according to claim 14, wherein said sensor is of the CCD type.

16. Device (1) according to claim 1, which is substantially portable and suitable to be connected, as peripheral, to a computer for the tratment, the storing and the comparison of the fingerprint.

17. Device (1) according to claim 1, which is a device for generating the required data for an electronic passport or for an electronic identity card.

18. Method for the taking of fingerprints using a prism (5), comprising the steps of:
* providing a first prism surface (3) to impress on it a fingerprint;
* providing a layer having a reduced reflectivity (13) directed toward the inside of the prism (5) on a surface adjacent (12) to said first surface (3);
* laterally illuminating said first surface (3); and
* taking the image of the fingerprint on a further prism surface (11).

19. Method according to claim 18, wherein said prism is an anamorphic prism (5).

20. Method according to claim 18, wherein said surface having a reduced reflectivity has a light absorption coefficient close to one.

21. Method according to claim 18, wherein the lighting is more intense at a lateral margin (29) of said first surface (3), and at the prism vertex at said first surface (3).

22. Method according to claim 21, wherein said lighting is carried out by infrared radiations.
